# EUROPÄISCHE PATENTSCHRIFT

(11) **EP 2 495 094 B1**
(45) Veröffentlichungstag und Bekanntmachung des Hinweises auf die Patenterteilung: **10.07.2013**
(21) Anmeldenummer: 12156490.0
(22) Anmeldetag: 22.02.2012
(51) Int. Cl.: B29C 70/46, B29C 70/48, B29C 70/86

(54) **Verfahren zur Herstellung eines faserverstärkten Kunststoffbauteils**
Method for producing a fibre reinforced plastic component
Procédé de fabrication d'un composant plastique renforcé par des fibres

(30) Priorität: 03.03.2011 US 201161448782 P; 02.07.2011 DE 102011106412
(43) Veröffentlichungstag der Anmeldung: 05.09.2012
(73) Patentinhaber: Magna Steyr Fahrzeugtechnik AG & Co KG, 8041 Graz (AT)
(72) Erfinder: Nagl, Rene, 8071 Hausmannstätten (AT); Eberl, Philipp, 8010 Graz (AT)
(74) Vertreter: Rausch, Gabriele

(56) Entgegenhaltungen:
- DE-A1- 4 016 042
- FR-A1- 2 543 054
- FR-A1- 2 684 062
- US-A- 3 891 488
- US-A1- 2009 236 777

## Beschreibung

### TECHNISCHES GEBIET

Die Erfindung betrifft ein Verfahren zur Herstellung eines faserverstärkten Kunststoffbauteils unter Zuhilfenahme eines Positivkerns, einer Negativform sowie wenigstens einer zusätzlichen Verstärkung.

### STAND DER TECHNIK

Kunststoffbauteile sind aus der heutigen Technik und insbesondere aus dem Kraftfahrzeugbau nicht mehr wegzudenken. Im Laufe der Zeit hat sich eine Vielzahl unterschiedlicher Herstellungsverfahren für solche Kunststoffbauteile herausgebildet. Insbesondere ist es bekannt, ein Kunststoffbauteil unter Zuhilfenahme eines Positivkerns, einer Negativform sowie wenigstens einer zusätzlichen Verstärkung herzustellen.

Die DE 10 2006 051 867 A1 offenbart dazu beispielsweise ein Herstellungsverfahren für ein aus faserverstärktem Kunststoff gewickeltes Rad mit einem Radstern und einem Felgenbett. Dabei bilden mehrere, in einer gemeinsamen Fläche aneinander liegende und miteinander verbundene Ringe den Radstern, wobei der Radstern und das Felgenbett kunstharzgetränkte, gewickelte Kohlefasern aufweisen und stoffschlüssig miteinander verbunden sind. Die besagten Ringe werden durch Umwickeln eines Positivkerns und Einlegen in eine Negativform hergestellt, wobei auch zusätzliche Verstärkungen in den Ring mit eingearbeitet sein können.

Die DE 10 2006 051 867 A1 beschäftigt sich mit der Herstellung von Kunststoffbauteilen mit prinzipiell konvexer Oberfläche offenbart aber keine Lehre, wie Kunststoffbauteile mit konkaven Abschnitten, welche häufig benötigt werden, hergestellt werden können. Bekannt ist es beispielsweise, einen Positivkern mit Fasern zu umwickeln und diese dann beispielsweise mit einem harzgetränkten Pinsel in die konkaven Bereiche des Positivkerns hinein zu tupfen oder stupsen. Dies ist ein äußerst zeitaufwändiges und mühseliges Unterfangen und daher für die Massenproduktion von Kunststoffbauteilen der genannten Art nur wenig geeignet. Desweiteren ist eine Reproduzierbarkeit des Verfahrens und damit eine gleichbleibende Qualität der Bauteile kaum gegeben. Nachteilig ist an der DE 10 2006 051 867 A1 weiterhin, dass Verstärkungen während des Umwickelns des Positivkerns mit harzgetränkten Fasern eingearbeitet werden. Dies hat zur Folge, dass die Verstärkungen nur sehr umständlich in die richtige Position gebracht werden können, da das Harz ein Verrutschen der Verstärkungen auf ihrem Untergrund begünstigen.

Aus der FR 2 684 062 A ist ein Verfahren zur Herstellung einer Fahrradgabel mit Rohren aus Verbundmaterial bekannt, wobei für den Kopf der Gabel ein fester Einsatz vorgesehen ist welcher zwei Zweige trägt mit welchen Kerne für die Rohre der Gabel verbunden werden. Das Verbundmaterial wird um die Kerne und die Zweige des Einsatzes platziert.

US 2009 236 777 A1 offenbart ein Verfahren gemäß den Schritten a) bis d) des Anspruchs 1, wobei aber Prepregs verwendet werden.

### OFFENBARUNG DER ERFINDUNG

Die Aufgabe der Erfindung ist es daher, ein verbessertes Herstellungsverfahren für ein Kunststoffbauteil anzugeben. Insbesondere soll eine Möglichkeit für die rationelle Produktion von Kunststoffbauteilen reproduzierbarer Qualität geschaffen werden, welche eingelegte Verstärkungen und daraus resultierende konkave Abschnitte des Positivkerns umfassen.

Die Aufgabe der Erfindung wird durch ein Verfahren zur Herstellung eines faserverstärkten Kunststoffbauteils gelöst, umfassend die Schritte:
a) Herstellen einer Positivanordnung durch Fixieren wenigstens einer gebrauchsfertigen Verstärkung auf einem Positivkern,
b) Umwickeln der Positivanordnung mit Fasern, wobei durch die Verstärkung gebildete, konkave Bereiche der Positivanordnung von den Fasern überspannt werden,
c) vollflächiges Andrücken der Fasern an die Positivanordnung in einer Negativform und
d) Aushärten des Bauteils in der Negativform nach Einbringung eines vernetzenden Kunststoffs,
wobei die Verstärkung in einem Kontaktbereich zu den Fasern eine kammartige beziehungsweise zinnen-artige Struktur aufweist.

Durch die Erfindung werden die Nachteile des eingangs genannten Standes der Technik überwunden. Insbesondere ist durch das Fixieren der Verstärkung auf dem Positivkern ein Verrutschen derselben ausgeschlossen. Wegen des Überspannens der konkaven Abschnitte der Positivanordnung entfällt auch das mühselige und zeitaufwändige tupfen oder stupsen der Fasern in die konkaven Bereiche der Positivanordnung hinein. Dadurch dass die Verstärkung in einem Kontaktbereich zu den Fasern eine kammartige beziehungsweise zinnen-artige Struktur aufweist, wird verhindert, dass die Fasern auf der Positivanordnung verrutschen. Die für die Negativform vorbereitete Anordnung behält während der Manipulation somit besser ihre Form, was zu einer noch besseren Reproduzierbarkeit beiträgt. Insgesamt bietet die Erfindung somit ein Verfahren zur rationellen Produktion von Kunststoffbauteilen reproduzierbarer Qualität.

Vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn der Positivkern als aufblasbarer Positivkern ausgeführt wird oder aus geschäumtem Kunststoff besteht. Erstere Variante bietet den Vorteil, dass der Positivkern wiederverwendet werden kann, zweitere Variante bietet den Vorteil, dass der Positivkern im fertigen Bauteil verbleiben kann.

Günstig ist es, wenn die Verstärkung aus Metall, Holz oder bereits ausgehärtetem Kunststoff besteht. Auf diese Weise können die Eigenschaften der Verstärkung gut an ein Anforderungsprofil angepasst werden.

Günstig ist es, wenn die Verstärkung als Flansch ausgeführt wird. Damit ist die Montage des Kunststoffbauteils auf anderen Bauteilen leicht möglich. Insbesondere kann die Verstärkung für diesen Zweck Montagelöcher umfassen.

Besonders vorteilhaft ist es auch, wenn die Höhe der Zinken beziehungsweise Zinnen der Wandstärke des faserverstärkten Kunststoffs entspricht. Auf diese Weise wird verhindert, dass die Zinken/Zinnen aus dem fertigen Bauteil herausragen.

Günstig ist es, wenn das Fixieren in Schritt a) formschlüssig ausgeführt wird. Auf diese Weise wird ein Verrutschen der Verstärkung auf dem Positivkern wirkungsvoll vermieden. Anstelle einer formschlüssigen Fixierung kann die Verstärkung natürlich auch auf den Positivkern aufgeklebt werden, insbesondere wenn dieser im fertigen Kunststoffbauteil verbleibt.

Günstig ist es, wenn als Fasern Glasfasern, Kevlarfasern, Aramidfasern, Carbonfasern, Pflanzenfasern oder Gemische derselben vorgesehen werden. Somit können die mechanischen Eigenschaften des fertigen Kunststoffbauteils in weiten Grenzen gesteuert werden.

Günstig ist es weiterhin, wenn die Fasern in Form von Fasersträngen, Geweben, Geflechten, Gestricken und/oder Vliesen verarbeitet werden. Auf diese Weise können die mechanischen Eigenschaften des fertigen Kunststoffbauteils in verschiedenen Richtungen gesteuert werden.

Das Herstellen einer geschlossenen Fläche ist insbesondere mit Geweben, Geflechten, Gestricken und/oder Vliesen leichter als mit Fasersträngen. Insbesondere ist es auch möglich, eigens für den Kunststoffbauteil hergestellte Gewebe, Geflechte, Gestricke und/oder Vliese zu verwenden.

Günstig ist es, wenn die Einbringung des vernetzenden Kunststoffs durch Tränken der Fasern mit einem flüssigen Kunststoff zwischen den Schritten b) und c) oder nach Schritt c) erfolgt. Das Einbringen des vernetzenden Kunststoffs kann durch Tränken der Fasern mit einem flüssigen Kunststoff (z.B. Epoxidharz oder Polyesterharz) erfolgen, beispielsweise durch Aufsprühen, Aufwalzen oder Bestreichen zwischen den Schritten b) und c). Alternativ oder zusätzlich kann die Einbringung des flüssigen Kunststoffs auch nach Schritt c) erfolgen, also in die geschlossene Negativform eingespritzt werden.

Günstig ist es, wenn das Bauteil zum Aushärten erhitzt wird. Einerseits wird damit die Aushärtung beschleunigt, andererseits können die mechanischen Eigenschaften des fertigen Kunststoffbauteils insbesondere bei Einsatz von Epoxidharz oder Polyesterharz durch das sogenannte "Tempern" beeinflusst werden.

Vorteilhaft ist es auch, wenn die Einbringung des vernetzenden Kunststoffs in Schritt b) durch Verwendung eines thermoplastische Fasern enthaltenden Fasergemisches und das Aushärten durch Erhitzen desselben erfolgt. Auf diese Weise kann das Einbringen eines flüssigen Kunststoffes vermieden werden, wodurch die Herstellung des Kunststoffbauteils gänzlich trocken erfolgen kann.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: einen Positivkern für das Kunststoffbauteil;
- Figur 2: eine Positivanordnung umfassend den Positivkern aus Fig. 1 sowie darauf befestigte Verstärkungen;
- Figur 3: die mit Fasern umwickelte Positivanordnung;
- Figur 4: die mit Fasern umwickelte Positivanordnung in eine Negativform eingelegt;
- Figur 5: wie Fig. 4 nur mit geschlossener Negativform;
- Figur 6: das fertige Kunststoffbauteil in der geöffneten Negativform;
- Figur 7: das fertige Kunststoffbauteil nach dem Entfernen des Positivkerns und
- Figur 8: eine Verstärkung mit kammartiger Struktur.

### DETAILIERTE BESCHREIBUNG DER ERFINDUNG

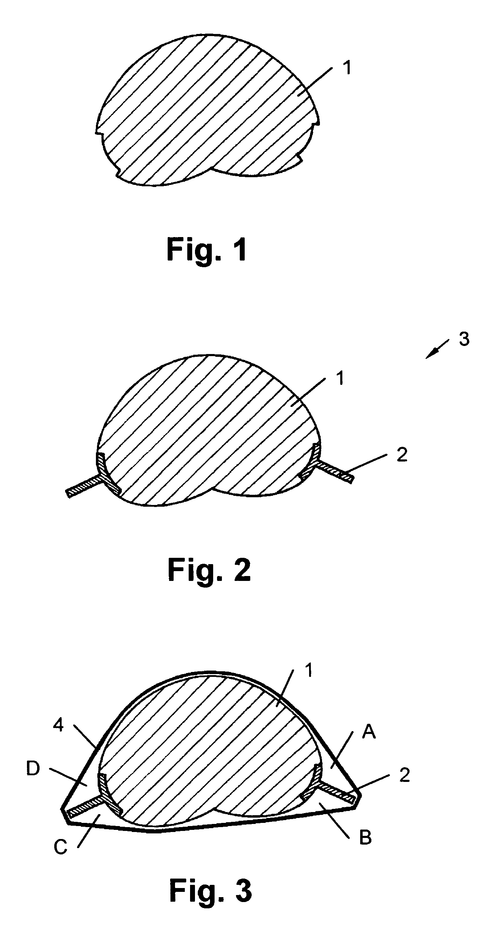

In den Figuren 1 bis 7 ist die Herstellung eines faserverstärkten Kunststoffbauteils dargestellt:

Fig. 1 zeigt einen Positivkern 1, der beispielsweise als aufblasbarer Positivkern ausgeführt ist oder aus geschäumtem Kunststoff besteht.

In einem ersten Schritt a), welcher in Fig. 2 dargestellt ist, wird eine gebrauchsfertige Verstärkung 2 auf dem Positivkern 1 fixiert, wodurch die Positivanordnung 3 entsteht. Die Verstärkung 2 kann beispielsweise aus Metall, Holz oder bereits ausgehärtetem Kunststoff bestehen und insbesondere als Flansch ausgeführt sein, beispielsweise um das fertige Kunststoffbauteil an anderen Bauteilen zu befestigen. Das Fixieren im Schritt a) kann insbesondere formschlüssig erfolgen, beispielsweise Zapfen/Vertiefungen im Positivkern 1 und Vertiefungen/Zapfen in der Verstärkung 2. Wenn der Positivkern 1 aus geschäumtem Kunststoff besteht, kann das Fixieren im Schritt a) insbesondere auch mit Stiften und/oder Nägeln erfolgen.

In einem zweiten Schritt b), welcher in Fig. 3 dargestellt ist, wird die Positivanordnung 3 mit Fasern 4 umwickelt, wobei durch die Verstärkung 2 gebildete, konkave Bereiche A..D der Positivanordnung 3 von den Fasern 4 überspannt werden. Als Fasern 4 können beispielsweise Glasfasern, Kevlarfasern, Aramidfasern, Carbonfasern, Pflanzenfasern oder Gemische derselben vorgesehen werden, welche in Form von Fasersträngen, Geweben, Geflechten, Gestricken und/oder Vliesen verarbeitet werden. Die Fasern 4 sollten so locker gewickelt sein, dass ein sicheres Andrücken im folgenden Schritt c) noch möglich ist. Insbesondere Carbonfasern weisen nämlich einen sehr hohen Elastizitätsmodul auf und lassen sich somit nur schwer dehnen. Die Fasern 4 müssen die konkaven Bereiche A..D somit nicht notwendigerweise geradlinig überspannen, sondern können auch ein wenig durchhängen. Umgekehrt kann durch vergleichsweise straffes Umwickeln eine Vorspannung in dem fertigen Kunststoffbauteil erzielt werden.

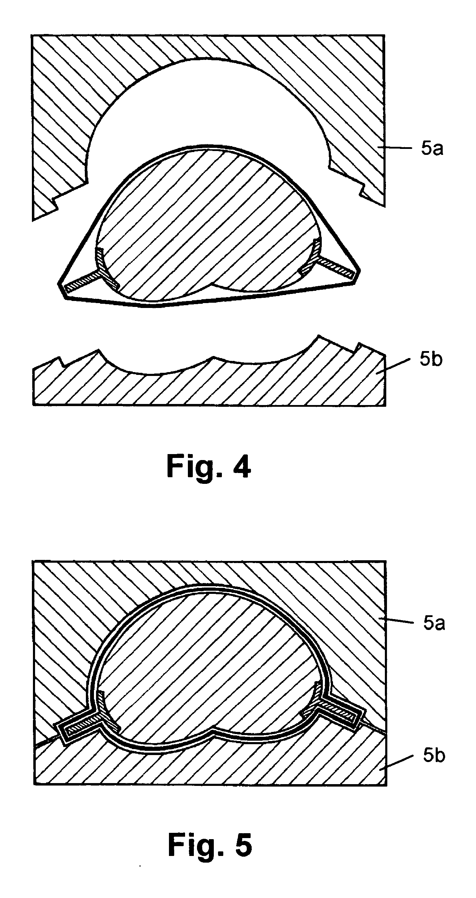

In einem dritten Schritt c) welcher in den Figuren 4 und 5 dargestellt ist, wird die im Schritt b) erhaltene Anordnung in eine Negativform 5a, 5b eingelegt (Fig. 4) und die Form 5a, 5b dann geschlossen (Fig. 5). Dabei werden die Fasern 4 vollflächig an die Positivanordnung 3 angedrückt.

In einem vierten Schritt d) wird das Bauteil 6a in der Negativform 5a, 5b nach Einbringung eines vernetzenden Kunststoffs ausgehärtet. Das Bauteil 6a kann dazu auch erhitzt werden.

Das Einbringen des vernetzenden Kunststoffs kann durch Tränken der Fasern 4 mit einem flüssigen Kunststoff (z.B. Epoxidharz oder Polyesterharz) erfolgen, beispielsweise zwischen den Schritten b) und c) durch Aufsprühen, Aufwalzen oder Bestreichen der in Fig. 3 dargestellten Anordnung mit dem besagten Kunststoff. Denkbar wäre in diesem Zusammenhang beispielsweise auch, dass bereits die in Fig. 2 dargestellte Positivanordnung 3 mit Klebstoff benetzt wird. Auch das Ankleben der Verstärkungen 2 an den Positivkern 1 ist natürlich vorstellbar.

Alternativ oder zusätzlich kann die Einbringung des flüssigen Kunststoffs auch nach Schritt c) erfolgen, also in die in Fig. 5 dargestellte, geschlossene Form 5a, 5b eingespritzt werden. Die hierzu nötigen Kanäle sind jedoch der Einfachheit halber nicht dargestellt. Als Kunststoffe kommen wiederum verschiedene Harze sowie beispielsweise auch Thermoplaste in Betracht.

In einer vorteilhaften Variante der Erfindung wird der vernetzende Kunststoff in Schritt b) durch Verwendung eines thermoplastische Fasern enthaltenden Fasergemisches eingebracht. Die Fasern 4 enthalten somit auch thermoplastische Fasern. Das Aushärten des Bauteils 6a erfolgt dann durch Erhitzen desselben, wodurch die thermoplastischen Fasern schmelzen und die temperaturstabilen Fasern (z.B. Glasfasern, Kevlarfasern, Aramidfasern, Carbonfasern, Pflanzenfasern oder deren Gemische) vernetzen.

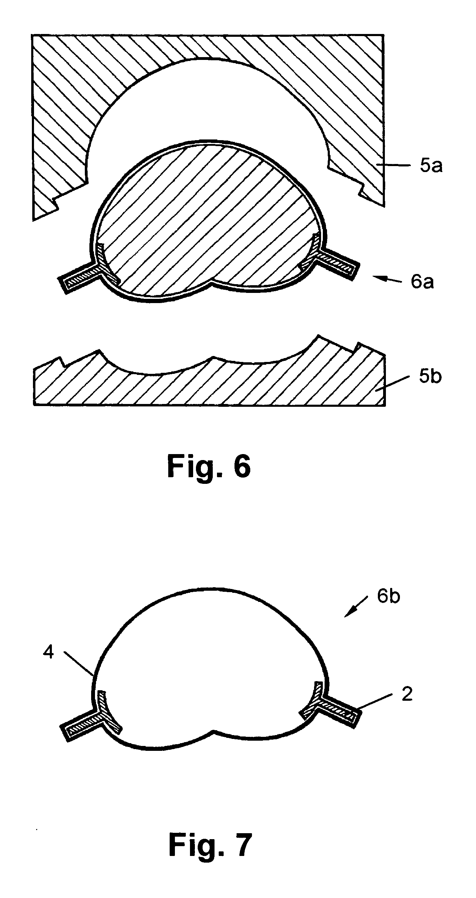

Fig. 6 zeigt schließlich, wie das fertige Bauteil 6a aus der Negativform 5a, 5b entnommen wird. Dieses kann so wie vorliegend weiterverwendet werden, oder es wird noch der Positivkern 1 entfernt, beispielsweise durch Entlüften eines aufblasbaren Positivkerns 1 oder durch Auswaschen eines geschäumten Kunststoffkerns. Das so erhaltene Kunststoffbauteil 6b ist in Fig. 7 dargestellt.

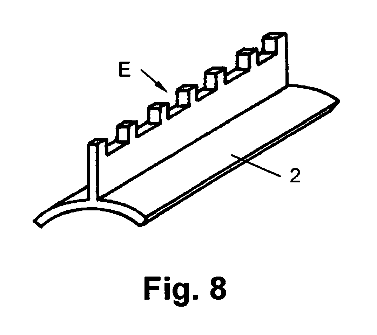

In Fig. 8 ist schließlich eine Ausgestaltung der Verstärkung 2 gemäß der Erfindung dargestellt. Diese weist in einem Kontaktbereich zu den Fasern 4 eine kammartige beziehungsweise zinnen-artige Struktur E auf, sodass die Fasern 4 nicht so leicht verrutschen und die in Fig. 3 dargestellte Anordnung besser ihre Form behält. Vorzugsweise entspricht die Höhe der Zinken beziehungsweise Zinnen der Wandstärke des faserverstärkten Kunststoffs, sodass die Zinken/Zinnen nicht aus dem fertigen Bauteil 6a, 6b herausragen.

Abschließend wird festgehalten, dass die Bestandteile der Figuren ggf. nicht maßstabsgetreu dargestellt sind. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Ferner wird darauf hingewiesen, dass die Form des dargestellten Bauteils 6a, 6b natürlich rein beispielhaft ist und nicht dazu herangezogen werden darf, den Schutzbereich der Patentansprüche zu limitieren. Der Fachmann kann die hier offenbarte Lehre leicht auf jegliche Bauteilform anwenden.

## Patentansprüche

1. Verfahren zur Herstellung eines faserverstärkten Kunststoffbauteils (6a, 6b), umfassend die Schritte:
a) Herstellen einer Positivanordnung (3) durch Fixieren wenigstens einer gebrauchsfertigen Verstärkung (2) auf einem Positivkern (1),
b) Umwickeln der Positivanordnung (3) mit Fasern (4), wobei durch die Verstärkung (2) gebildete, konkave Bereiche (A..D) der Positivanordnung (3) von den Fasern (4) überspannt werden,
c) vollflächiges Andrücken der Fasern (4) an die Positivanordnung (3) in einer Negativform (5a, 5b) und
d) Aushärten des Bauteils (6a) in der Negativform (5a, 5b) nach Einbringung eines vernetzenden Kunststoffs,
wobei die Verstärkung (2) in einem Kontaktbereich zu den Fasern (4) eine kammartige beziehungsweise zinnen-artige Struktur (E) aufweist.

2. Verfahren nach Anspruch 1, **dadurch gekennzeichnet, dass** der Positivkern (1) als aufblasbarer Positivkern ausgeführt wird oder aus geschäumtem Kunststoff besteht.

3. Verfahren nach Anspruch 1 oder 2, **dadurch gekennzeichnet, dass** die Verstärkung (2) aus Metall, Holz oder bereits ausgehärtetem Kunststoff besteht.

4. Verfahren nach einem der Ansprüche 1 bis 3, **dadurch gekennzeichnet, dass** die Verstärkung (2) als Flansch ausgeführt wird.

5. Verfahren nach einem der Ansprüche 1 bis 4, **dadurch gekennzeichnet, dass** die Höhe der Zinken beziehungsweise Zinnen der Wandstärke des faserverstärkten Kunststoffs entspricht.

6. Verfahren nach einem der Ansprüche 1 bis 5, **dadurch gekennzeichnet, dass** das Fixieren im Schritt a) formschlüssig ausgeführt wird.

7. Verfahren nach einem der Ansprüche 1 bis 6, **dadurch gekennzeichnet, dass** als Fasern (4) Glasfasern, Kevlarfasern, Aramidfasern, Carbonfasern, Pflanzenfasern oder Gemische derselben vorgesehen werden.

8. Verfahren nach einem der Ansprüche 1 bis 7, **dadurch gekennzeichnet, dass** die Fasern (4) in Form von Fasersträngen, Geweben, Geflechten, Gestricken und/oder Vliesen verarbeitet werden.

9. Verfahren nach einem der Ansprüche 1 bis 8, **dadurch gekennzeichnet, dass** die Einbringung des vernetzenden Kunststoffs durch Tränken der Fasern (4) mit einem flüssigen Kunststoff zwischen den Schritten b) und c) oder nach Schritt c) erfolgt.

10. Verfahren nach einem der Ansprüche 1 bis 9, **dadurch gekennzeichnet, dass** das Bauteil (6a) zum Aushärten erhitzt wird.

11. Verfahren nach einem der Ansprüche 1 bis 10, **dadurch gekennzeichnet, dass** die Einbringung des vernetzenden Kunststoffs in Schritt b) durch Verwendung eines thermoplastische Fasern enthaltenden Fasergemisches und das Aushärten durch Erhitzen desselben erfolgt.

## Claims

1. Method for producing a fibre-reinforced plastic component (6a, 6b), comprising the steps:
a) producing a positive arrangement (3) by fixing at least one reinforcement (2) ready to be used on a positive core (1),
b) winding fibres (4) around the positive arrangement (3), concave regions (A...D) of the positive arrangement (3) that are formed by the reinforcement (2) being spanned by the fibres (4),
c) pressing the entire area of the fibres (4) onto the positive arrangement (3) in a negative mould (5a, 5b), and
d) curing the component (6a) in the negative mould (5a, 5b) following the introduction of a cross-linking plastic,
the reinforcement (2) having a comb-like or prong-like structure (E) in a contact region with the fibres (4).

2. Method according to Claim 1, **characterized in that** the positive core (1) is implemented as an inflatable positive core or consists of foamed plastic.

3. Method according to Claim 1 or 2, **characterized in that** the reinforcement (2) consists of metal, wood or already cured plastic.

4. Method according to one of Claims 1 to 3, **characterized in that** the reinforcement (2) is implemented as a flange.

5. Method according to one of Claims 1 to 4, **characterized in that** the height of the tines or prongs corresponds to the wall thickness of the fibre-reinforced plastic.

6. Method according to one of Claims 1 to 5, **characterized in that** the fixing in step a) is implemented in a form-fitting manner.

7. Method according to one of Claims 1 to 6, **characterized in that** the fibres (4) provided are glass fibres, Kevlar fibres, aramid fibres, carbon fibres, vegetable fibres or mixtures of the same.

8. Method according to one of Claims 1 to 7, **characterized in that** the fibres (4) are processed in the form of fibre strands, weaves, networks, knits and/or nonwovens.

9. Method according to one of Claims 1 to 8, **characterized in that** the introduction of the cross-linking plastic by impregnating the fibres (4) with a liquid plastic is carried out between steps b) and c) or after step c).

10. Method according to one of Claims 1 to 9, **characterized in that** the component (6a) is heated for the purpose of curing.

11. Method according to one of Claims 1 to 10, **characterized in that** the introduction of the cross-linking plastic in step b) is carried out by using a fibre mixture containing thermoplastic fibres, and the curing by heating the same.

## Revendications

1. Procédé de fabrication d'un composant (6a, 6b) en matière synthétique renforcée de fibres, le procédé comportant les étapes qui consistent à :
a) réalisation d'un agencement positif (3) par fixation d'au moins un renfort (2) prêt à l'emploi sur un noyau positif (1),
b) enroulement de fibres (4) autour de l'ensemble positif (3), les parties concaves (A...D) de l'agencement positif (3) formées par le renfort (2) étant recouvertes par les fibres (4),
c) enfoncement de toute la surface des fibres (4) situées sur l'agencement positif (3) dans un moule négatif (5a, 5b) et
d) durcissement du composant (6a) dans le moule négatif (5a, 5b) après apport d'une matière synthétique réticulable,
le renfort (2) présentant une structure (E) en forme de peigne ou de créneaux dans la zone de contact avec les fibres (4).

2. Procédé selon la revendication 1, **caractérisé en ce que** le noyau positif (1) est configuré comme noyau positif gonflable ou est constitué d'une matière synthétique en mousse.

3. Procédé selon les revendications 1 ou 2, **caractérisé en ce que** le renfort (2) est constitué de métal, de bois ou de matière synthétique déjà durcie.

4. Procédé selon l'une des revendications 1 à 3, **caractérisé en ce que** le renfort (2) est configuré comme bride.

5. Procédé selon l'une des revendications 1 à 4, **caractérisé en ce que** la hauteur des dents ou des créneaux correspond à l'épaisseur de la paroi de la matière synthétique renforcée de fibres.

6. Procédé selon l'une des revendications 1 à 5, **caractérisé en ce que** la fixation réalisée à l'étape a) est en correspondance géométrique.

7. Procédé selon l'une des revendications 1 à 6, **caractérisé en ce que** les fibres (4) prévues sont des fibres de verre, des fibres de kevlar, des fibres d'aramide, des fibres de carbone, des fibres végétales ou des mélanges de ces fibres.

8. Procédé selon l'une des revendications 1 à 7, **caractérisé en ce que** les fibres (4) sont traitées en forme de barreaux de fibres, de tissu, de treillis, de tricot et/ou de feutre.

9. Procédé selon l'une des revendications 1 à 8, **caractérisé en ce que** l'apport de la matière synthétique réticulable s'effectue en imprégnant les fibres (4) d'une matière synthétique liquide entre les étapes b) et c) ou après l'étape c).

10. Procédé selon l'une des revendications 1 à 9, **caractérisé en ce que** le composant (6a) est chauffé pour être durci.

11. Procédé selon l'une des revendications 1 à 10, **caractérisé en ce que** l'apport de la matière synthétique réticulable à l'étape b) s'effectue en recourant à un mélange de fibres contenant des fibres thermoplastiques et en durcissant le mélange par chauffage.
